(19) Europäisches Patentamt
European Patent Office
Office européen des brevets

(11) **EP 4 438 002 A1**

(12) **EUROPEAN PATENT APPLICATION**
published in accordance with Art. 153(4) EPC

(43) Date of publication:
**02.10.2024 Bulletin 2024/40**

(21) Application number: **22898021.5**

(22) Date of filing: **15.11.2022**

(51) International Patent Classification (IPC):
*A61C 8/00* (2006.01)       *A61C 5/70* (2017.01)

(52) Cooperative Patent Classification (CPC):
**A61C 5/70; A61C 8/00**

(86) International application number:
**PCT/IB2022/060982**

(87) International publication number:
**WO 2023/094933 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 KR 20210163846**
**18.05.2022 KR 20220060732**

(71) Applicant: **Neobiotech, Co., Ltd.**
**Seoul 08381 (KR)**

(72) Inventor: **HEO, Young Ku**
**Hanam-si Gyeonggi-do 12905 (KR)**

(74) Representative: **Mewburn Ellis LLP**
**Aurora Building**
**Counterslip**
**Bristol BS1 6BX (GB)**

(54) **DETACHABLE DENTAL IMPLANT SYSTEM**

(57)     A detachable dental implant system includes: an implant body including an implantation part that is implanted in an alveolar bone and an abutment part that is positioned on a top of the implantation part and provides an outer inclination surface having a truncated pillar shape and an internal space with an open top; and a crown medium that is disposed between the abutment part and a prosthesis and fixes the prosthesis to the abutment part by itself, wherein the crown medium includes an accommodation space providing a first close contact inclination surface that is in close surface contact with the outer inclination surface and being able to accommodate the abutment part, and a distance holder extending downward from a ceiling of the accommodation space and inserted in the internal space of the abutment part with an end thereof fixed to the abutment part, and surface contact between the outer inclination surface and the first close contact inclination surface and fixing between the abutment part and the distance holder generate resistance torque that interferes with rotation of the crown medium with respect to the abutment part.

[Fig. 4]

**Description**

[Technical Field]

The present disclosure relates to a detachable dental implant system and, in more detail, a detachable dental implant system that makes it possible to easily mount and separate a prosthesis such as an artificial tooth even without forming a screw hole in the prosthesis and can prevent the prosthesis from separating from an abutment due to various shock events that are applied to the prosthesis.

[Background Art]

Dental implant systems of the related art may include a fixture that is implanted in an alveolar bone, an abutment that is fixed to the fixture, and a prosthesis that is bonded to the abutment. A prosthesis, which is an artificial tooth, is integrally coupled to an abutment by an adhesive such as dental cement and a screw hole is formed in the prosthesis, so it is possible to fix and separate the prosthesis to and from a fixture together with the abutment. A method of coupling an abutment and a prosthesis through cement with the abutment positioned in a fixture and using a screw hole formed in the prosthesis has been disclosed in Korean Patent No. 10-0537219, etc.

Dental implant systems of the related art may cause problems such as repairing or replacing an artificial tooth, an abutment, a fixture, etc. on the spot of dental clinic, for example, due to breakage of a connecting screw or various other reasons. In order to solve these problems, it may be required to form a screw hole again in an artificial tooth to be connected to a connecting screw, loosen or remove a connecting screw, replace an artificial tooth, an abutment, etc., fasten again a connecting screw, fill again a hole with resin, etc.

In relation to this matter, a dental implant system has been disclosed in Korean Patent No. 10-2323729. According to this dental implant system, a screw hole is perpendicularly formed in a cap, and a C-ring-shaped anti-separation part and a ring-shaped sealing part are provided on the outer surface of an abutment, which may interfere with complete close contact between the cap and the abutment.

Further, since the anti-separation part and the sealing part are formed around the outer surface of the abutment and occupy a relatively large area, sufficient surface contact cannot be achieved when the abutment is formed in a small size of 5mm or less.

It is impossible to achieve surface contact between the abutment and the cap unless the anti-separation part is manufactured without an error. This is because, for example, when the anti-separation part is even finely large or twisted, a gap is formed between the abutment and the cap, and when the anti-separation part is finely small, the abutment and the cap may be loosely coupled.

[Disclosure]

[Technical Problem]

The present disclosure provides a detachable dental implant system that makes it possible to couple an abutment and a prosthesis through only surface contact even without forming a screw hole in the prosthesis and makes it possible to easily separate the prosthesis from the structure of the abutment rather than a fixture and repair or replace the prosthesis.

The present disclosure provides a detachable dental implant system that can maximally improve a coupling force in coupling that uses surface contact.

The present disclosure provides a detachable dental implant system that can prevent instantaneous coming-off of a prosthesis in addition to a coupling force by surface contact.

The present disclosure provides a detachable dental implant system that makes it possible to easily separate and mount a prosthesis even though the separate prosthesis is not moved in the axial direction of an abutment even when an implanted fixture inclines or two or more fixtures are connected through a bridge.

[Technical Solution]

According to an exemplary embodiment of the present disclosure, a detachable dental implant system includes: an implant body including an implantation part that is implanted in an alveolar bone and an abutment part that is positioned on a top of the implantation part and provides an outer inclination surface having a truncated pillar shape and an internal space with an open top; and a crown medium that is disposed between the abutment part and a prosthesis and fixes the prosthesis to the abutment part by itself, wherein the crown medium includes an accommodation space providing a first close contact inclination surface that is in close surface contact with the outer inclination surface and being able to accommodate the abutment part, and a distance holder extending downward from a ceiling of the accommodation space and inserted in the internal space of the abutment part with an end thereof fixed to the abutment part, and surface contact between the outer inclination surface and the first close contact inclination surface and fixing between the abutment part and the distance holder generate resistance torque that interferes with rotation of the crown medium with respect to the abutment part.

The crown medium and the abutment part may be coupled by coupling by surface contact or coupling by the distance holder, and the distance holder limits a coupling distance between the crown medium and the abutment part, thereby being able to prevent coming-off between the outer inclination surface and the first close contact inclination surface.

Accordingly, the crown medium and the abutment part can be fastened to each other without cement or an adhesive, and the prosthesis can be separably coupled to the abutment part even without forming a screw hole in the prosthesis.

A fixture and the abutment part may be coupled by thread-fastening, and the coupling type may be various types including an internal type or an external type.

The outer inclination surface may be formed in a truncated pillar shape, and the truncated pillar shape may be understood as a concept including a truncated cone shape or a truncated pyramid shape.

An inner inclination surface having an inverse truncated pillar shape may be formed as an inner wall in the internal space of the abutment part. A ring-shaped protrusion may be formed on the ceiling of the crown medium around the distance holder and the ring-shaped protrusion may provide a second close contact inclination surface, which is in surface contact with the inner inclination surface, as an outer surface.

In this embodiment, the outer inclination surface and the inner inclination surface may be formed with different heights, and a lower end of the inner inclination surface may be positioned higher than a lower end of the outer inclination surface. A locking position between the inner inclination surface and the second close contact inclination surface and a locking position between the outer inclination surface and the first close contact inclination surface are different from each other, thereby being able to resist separation therebetween.

For example, a height $h_1$ from the upper end of the abutment part to the lower end of the inner inclination surface may be made shorter than a height $h_2$ from the lower end of the inner inclination surface to the lower end of the outer inclination surface.

An angle $\theta_1$ of the outer inclination surface and an angle $\theta_2$ of the inner inclination surface from a central axis of the abutment part may be determined as 4° ~ 15°. The angles $\theta_1$ and $\theta_2$ of the inclination surfaces may be understood as positive numbers having different directions, and when the angles are smaller than 4°, the prosthesis and the abutment part has to be coupled almost only in the axial direction, so difficulty of the system may excessively increases. Further, when the angles are larger than 15°, the coupling force between the prosthesis and the abutment part decreases, so the prosthesis may be easily separated from the abutment even by a very small external force. For reference, in the specification, the angles of the inclination surfaces are based on a cross-section passing through the central axis of the abutment part and may be understood as acute angles with respect to the central axis regardless of up and down directions.

Further, the angle $\theta_1$ of the outer inclination surface and the angle $\theta_2$ of the inner inclination surface from the central axis of the abutment part may be made with a difference within 3°.

The distance holder may be provided in a pillar shape having a protrusion or a groove formed at an end, and a groove or a protrusion that is fitted to the protrusion or the groove of the distance holder may be formed in the internal space.

Further, the distance holder may be provided in a cylindrical shape having elastic legs formed at an end, a protrusion may be formed at an end of the elastic legs, and a groove that is fitted to the protrusion of the elastic legs may be formed on an inner wall of the internal space.

A female threaded portion may be formed at a lower portion of the inner space under the groove that is fitted to the elastic legs and a part fitting to the female threaded portion may be fixed even without forming the distance holder every time when temporarily fixing an impression coping, etc. other than the abutment part.

A sealing inclination surface having an inclination angle smaller than the angle $\theta_1$ of the outer inclination surface may be formed at a lower portion of the outer inclination surface.

[Advantageous Effects]

According to the detachable dental implant system of the present disclosure, a prosthesis and an abutment part are not permanently bonded and a screw is not used when a prosthesis and an abutment part are coupled, so it is not required to form a screw hole in a prosthesis.

According to the detachable dental implant system of the present disclosure, it is required to be able to easily separate a prosthesis from an abutment part and prevent separation of a prosthesis due to unexpected events. To this end, it is possible to achieve the objective through coupling by 3-dimensional surface contact and by using distance limitation using a distance holder.

It was impossible to completely prevent separation of a prosthesis only through surface contact, so, in the present disclosure, it is possible to prevent the distance holder from being influenced by an external force by positioning the distance holder in the abutment part rather than the outer surface of the abutment part. Further, the distance holder is coupled to or integrally formed with a crown medium, so it is possible to manufacture a crown medium in a small size with a height, a width, etc. of about 5mm. Since it is possible to manufacture a crown medium in a small size, the crown medium can be applied also to implantation of small teeth such as front teeth.

According to the detachable dental implant system of the present disclosure, it is possible to form a crown medium in a small size due to inner and outer inclination surfaces and the distance holder and it is also possible to maximally improve a coupling force using surface contact by limiting a distance through the distance holder. Even though a crown medium and an abutment part are made relatively short, it is possible to resist lateral pressure and it is not required to remove the medium.

Further, since the distance holder is rooted and fixed in a crown medium, when the crown medium and a prosthesis are moved toward an abutment part, the end of the distance holder partially deforms while sliding in the internal space or on the inner inclination surface of the abutment part, whereby approaching in an inclined direction other than an axial direction is also possible.

The present disclosure provides a detachable dental implant system that can prevent instantaneous coming-off of a prosthesis in addition to a coupling force by surface contact. Even when an implanted fixture is inclined or two or more fixtures implanted at an angle are connected through a bridge, it is possible to easily separate and mount a separate prosthesis using an outer or an inner inclination surface even though the prosthesis is not moved in the same direction as the axial direction of an abutment part.

[Description of Drawings]

FIG. 1 is a view illustrating a detachable dental implant system according to an embodiment of the present disclosure.
FIG. 2 is a view illustrating a cross-section of the detachable dental implant system of FIG. 1.
FIG. 3 is a view illustrating a coupling structure of the detachable dental implant system of FIG. 1.
FIGS. 4 and 5 are views illustrating a coupling process of the detachable dental implant system of FIG. 1.
FIG. 6 is a view illustrating effects of the detachable dental implant system of FIG. 1.
FIG. 7 is a view illustrating a crown medium of a detachable dental implant system according to an embodiment of the present disclosure.
FIG. 8 is a view illustrating a coupling process of a detachable dental implant system using the crown medium of FIG. 7.
FIG. 9 is a view illustrating effects of the detachable dental implant system of FIG. 8.
FIG. 10 is a view illustrating a detachable dental implant system according to an embodiment of the present disclosure.
FIG. 11 is a view illustrating a cross-section of the detachable dental implant system of FIG. 10.
FIG. 12 is a view illustrating a coupling structure of the detachable dental implant system of FIG. 10.
FIG. 13 is a view illustrating a coupling process of the detachable dental implant system of FIG. 10.
FIGS. 14 to 16 are views illustrating other use examples of a detachable dental implant system according to an embodiment of the present disclosure.
FIG. 17 is a view illustrating a detachable dental implant system according to an embodiment of the present disclosure.
FIG. 18 is a view illustrating a detachable dental implant system according to an embodiment of the present disclosure.
FIG. 19 is a view illustrating a detachable dental implant system according to an embodiment of the present disclosure.
FIG. 20 is a view illustrating a cross-section of the detachable dental implant system of FIG. 19.
FIG. 21 is a view illustrating a coupling structure of the detachable dental implant system of FIG. 19. and
FIG. 22 is a view illustrating a coupling process of the detachable dental implant system of FIG. 19.

[Mode for Invetion]

Preferred embodiments of the present disclosure will be described in detail with reference to the accompanying drawings, but the present disclosure is not limited or restricted to the embodiments. For reference, the same reference numerals substantially indicate the same components in the description, it is possible to refer to the matters shown in other figures under this rule, and matters that are determined as being apparent or repetitive to those skilled in the art may be omitted.

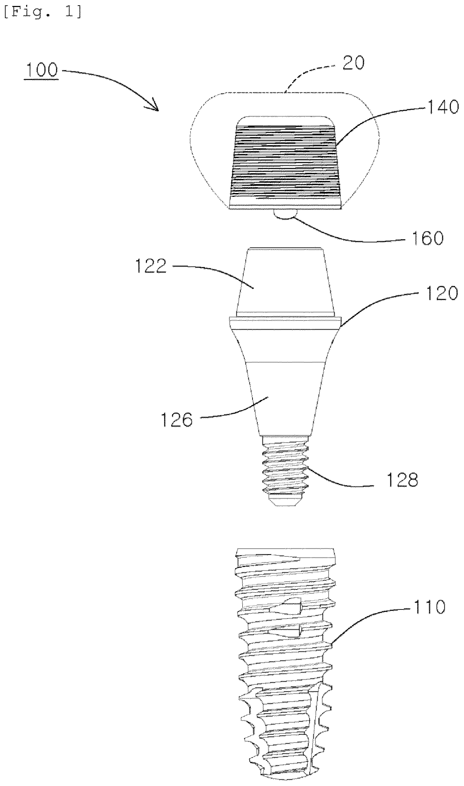

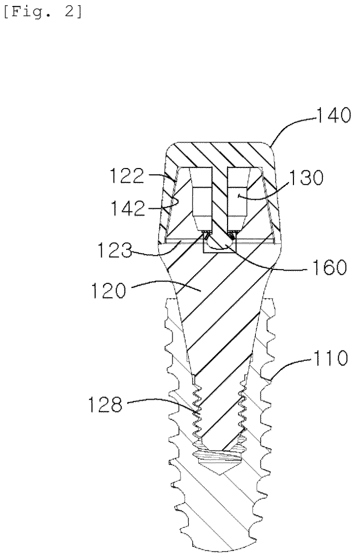

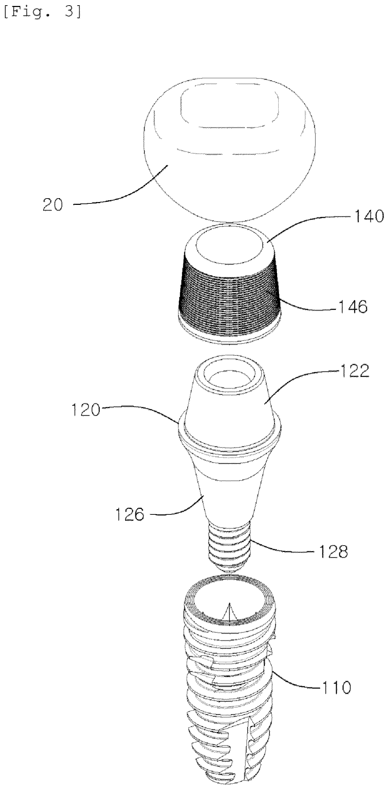

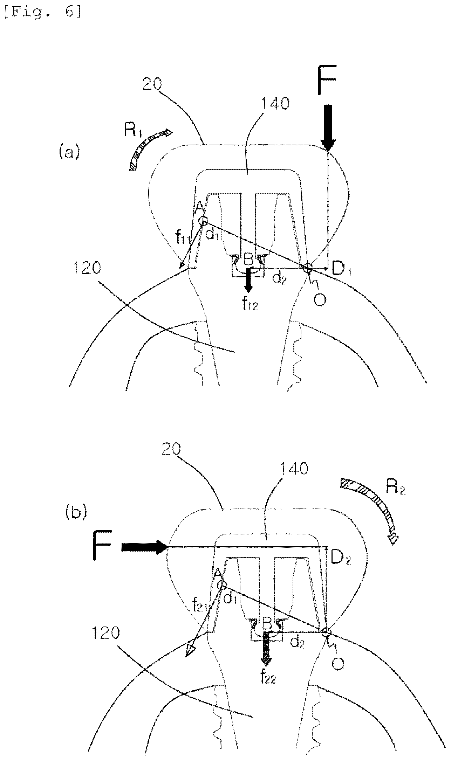

FIG. 1 is a view illustrating a detachable dental implant system according to an embodiment of the present disclosure, FIG. 2 is a view illustrating a cross-section of the detachable dental implant system of FIG. 1, FIG. 3 is a view illustrating a coupling structure of the detachable dental implant system of FIG. 1, FIGS. 4 and 5 are views illustrating a coupling process of the detachable dental implant system of FIG. 1, and FIG. 6 is a view illustrating effects of the detachable dental implant system of FIG. 1.

Referring to FIGS. 1 to 6, a detachable dental implant system 100 according to an embodiment of the present disclosure may include a fixture 110 that is an implantation part, an abutment 120, and a crown medium 140. The fixture 110 is a structure that is implanted in an alveolar bone, and when the fixture 110 is implanted, the abutment 120 and the crown medium 140 integrally bonded with a prosthesis 20 can be fixed on the fixture 110. The fixture 110, the abutment 120, the crown medium 140, etc. may be made of titanium and the prosthesis 20 may be made of composite resin, ceramic, or the like

In this embodiment, the abutment 120 may be coupled to the fixture 110 in an internal type, the crown medium 140 can be coupled to the upper portion over a body 126 tapered downward, and a male bolt 128 may be formed on the lower portion under the body 126.

Since the fixture 110 is implanted in an alveolar bone, it may be influenced by various factors, depending on the body conditions of patients and operation conditions, and the implanted position, angle, etc. thereof may be changed in a stabilization process after implantation. For example, the conditions for osseointegration of a fixture may be changed by a masticatory force.

Accordingly, in this embodiment, the abutment 120 may be separately provided and may be fixed to the fixture 110 through thread-fastening after the fixture 110 is implanted. An operator can determine later the type, size, etc. of the abutment 120 in consideration of the oral structures of patients, the implanted conditions of a fixture, etc. in various ways and the initial design may be maintained, but the design may be changed from the initial design.

The upper portion of the abutment 120 may provide an outer inclination surface 122 having a truncated pillar shape and an internal space 130 with an open top. There is a space corresponding to the internal space in abutments of the related art, but the space of the abutments of the related art is a space for passing a screw through a prosthesis, but the internal space 130 in this embodiment may be used as a space for maintaining the distance between the crown medium 140 and the abutment 120 by inserting a distance holder 160.

Actually, the distance holder 160 is formed at the center of the ceiling of an accommodation space 145 in this embodiment, so it may be difficult to form a screw hole in the prosthesis 20.

The crown medium 140 can form the accommodation space 145, which is open downward, like a cap and the outer surface thereof may be bonded with the prosthesis 20. A large number of prominences and depressions 146 may be formed on the outer surface of the crown medium 140 to enhance adhesion with the prosthesis 20.

Referring to FIG. 2, the crown medium 140 can provide an accommodation space that can accommodate the upper portion of the abutment 120. The accommodation space may form a first close contact inclination surface 142 entirely forming close contact with the outer inclination surface 122 and the distance holder 16 extending downward may be formed at the center of the ceiling of the accommodation space.

The distance holder 160 may be integrally formed or coupled with the crown medium 140 and the end thereof may be formed in a blunt shape with a large size. A space in which the end of the distance holder 160 can be accommodated may be formed the bottom of the internal space 130 and an elastic member 134 that can fix the end of the distance holder 160 may be provided at the inlet of the space.

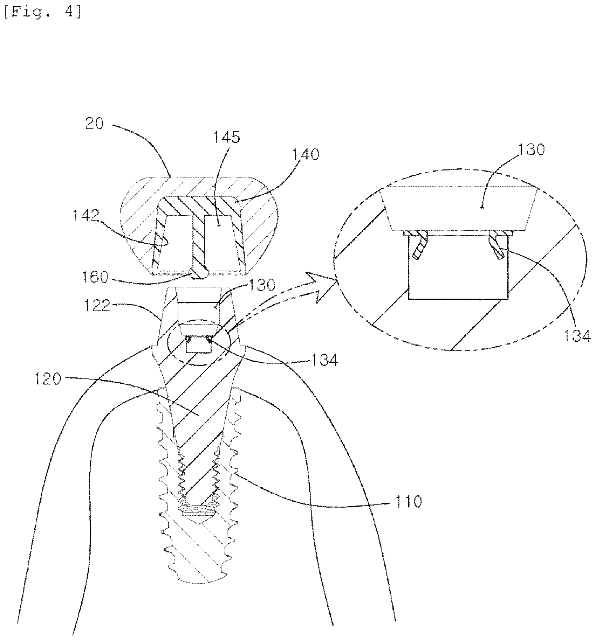

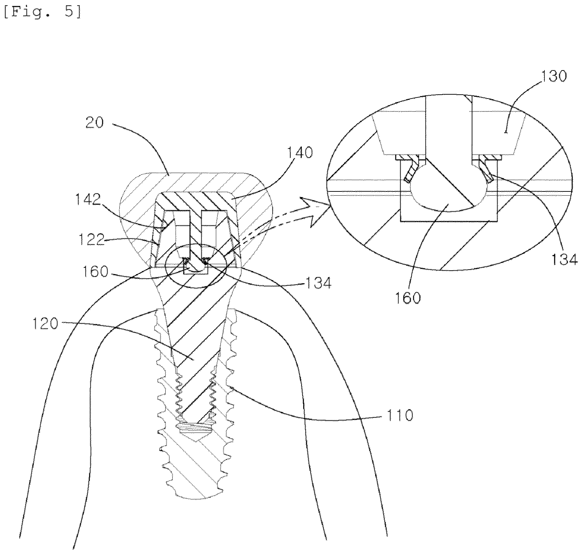

Referring to FIGS. 4 and 5, processes before and after the end of the distance holder 160 is coupled to the elastic member 134 are shown and the end of the distance holder 160 is temporarily fixed through the elastic member 134, whereby the outer inclination surface 122 of the abutment 120 and the first close contact inclination surface 142 of the crown medium 140 can keep in close contact with each other by a fixing force other than gravity.

For reference, the outer inclination surface 122 and the first close contact inclination surface 142 are each formed in a truncated cone shape in this embodiment, but they may be formed in a truncated pyramid shape in another embodiment. Further, the outer inclination surface 122 and the first close contact inclination surface 142 keep entirely in close contact with each other and, unlike the related art, can keep in contact with each other throughout all of surfaces without factors that interfere with close contact of the two inclination surfaces such as a C-ring, a sealing, and a packing.

Further, a sealing inclination surface 123 having an inclination angle smaller than the angle $\theta_1$ of the outer inclination surface 122 may be further formed at the lower portion of the outer inclination surface 122 and a vertical surface or an inclination surface corresponding to the sealing inclination surface 123 may be formed also at the first close contact inclination surface 142.

The outer inclination surface 122 has an inclination at about 4° ~ 15° from the central axis of the abutment 120, but the sealing inclination surface 123 may have an inclination angle smaller than that of the outer inclination surface 122 or an inclination angle of about 4° or less.

Since the sealing inclination surface 123 is formed at the lower portion of the outer inclination surface 122, even though it has an inclination angle of about 4° or less, it may not interfere with coupling between the crown medium 140 and the abutment 120 and can prevent foreign substances from entering between the crown medium 140 and the abutment 120. Further, it is possible to reduce fine shaking between the crown medium 140 and the abutment 120.

The crown medium 140 and the abutment 120 can keep coupled by the surface contact of the inclination surfaces entirely facing each other and can form very close surface contact by close contact, friction, negative pressure, or the like between the outer inclination surface 122 and the first close contact inclination surface 142.

However, the surface contact between the outer inclination surface 122 and the first close contact inclination surface 142 is very useful, but the coupling force may be lost in vain when coming-off is generated by unexpected events.

As in FIG. 6, an event that may be generated in an implant system may be generated by repeated mastication (a) and may be generated even by pushing or twisting between teeth (b).

Referring to FIG. 6A, when an eccentric force F is applied to the top of the prosthesis 20, torque may be generated at the end O between the adjacent crown medium 140 and abutment 120. Assuming that even torque R1 by the eccentric force F is $F*D_1$, resistance torque at an opposite point A between the crown medium 140 and the abutment 120 can be expressed as $f_{11}*d_1$.

Assuming that there is no distance holder 160, coming-off may not be generated within a limit at which the resistance torque $f_{11}*d_1$ can overcome the generated event torque $F*D_1$, but when the event torque $F*D_1$ is larger than the maximum of the resistance torque $f_{11}*d_1$, coming-off may be generated.

Further, when instantaneous coming-off is generated between the crown medium 140 and the abutment 120 due to sudden shock or repeated load, the prosthesis 20 may come off in vain with the crown medium 140.

However, if the distance holder 160 can restrict axial movement of the abutment 120, it is possible to prevent instantaneous coming-off between the crown medium 140 and the abutment 120 due to sudden shock or repeated load.

Further, even though load is continuously applied, it is possible to prevent coming-off of the prosthesis 20 because the resistance torque accompanying the event torque $F*D_1$ is the sum of resistance torque $f_{11}*d_1$ by surface contact of the inclination surfaces and resistance torque $f_{12}*d_2$ by the distance holder 160.

Referring to FIG. 6B, it is possible to assume a case in which the same force F is applied to a side of the prosthesis 20 rather than the top. Even in this case, the event torque by the eccentric force F can be expressed as $F*D_2$ and relatively larger event torque $F*D_2$ may be applied.

In this case, torque may be generated at the far end O between the crown medium 140 and the abutment 120. Assuming that there is no distance holder 160 also in this case, coming-off may not be generated within a limit at which the resistance torque $f_{21}*d_1$ can overcome the generated event torque $F*D_2$, but relatively large event torque $F*D_2$ is applied, so it may be difficult to overcome the event torque $F*D_2$ using the resistance torque $f_{21}*d_1$.

However, since the distance holder 160 can restrict axial movement of the abutment 120, it is possible to prevent instantaneous coming-off between the crown medium 140 and the abutment 120 due to sudden shock or repeated load.

Further, even though load is continuously applied, it is possible to effectively prevent coming-off of the prosthesis 20 because the resistance torque accompanying the event torque $F*D_2$ is the sum of resistance torque $f_{21}*d_1$ by surface contact of the inclination surfaces and resistance torque $f_{22}*d_2$ by the distance holder 160.

Stable coupling between the abutment 120 and the crown medium 140 can be further enhanced by using an inner inclination surface 132 in the internal space 130 of the abutment 120 and forming a second close contact inclination surface 152 at the crown medium 140.

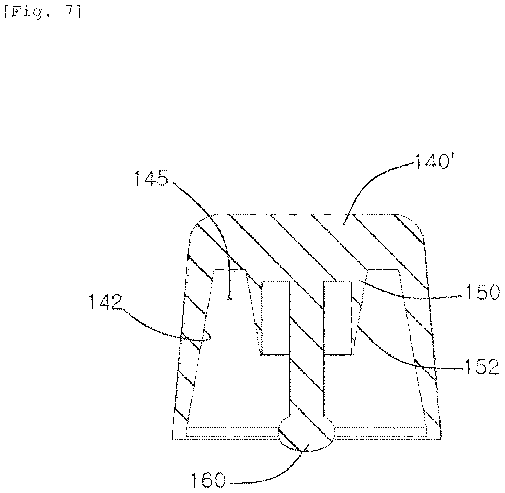

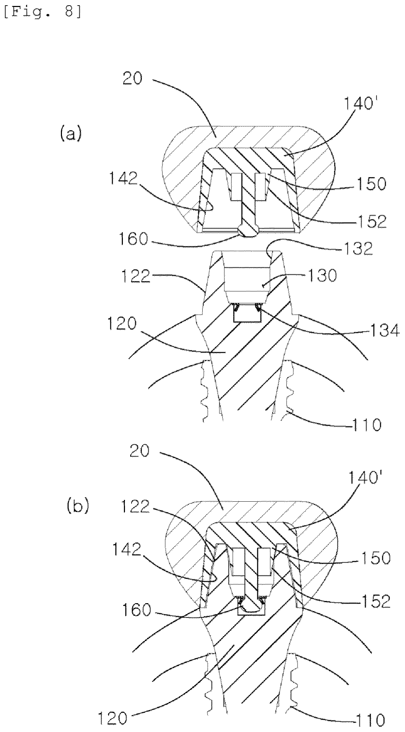

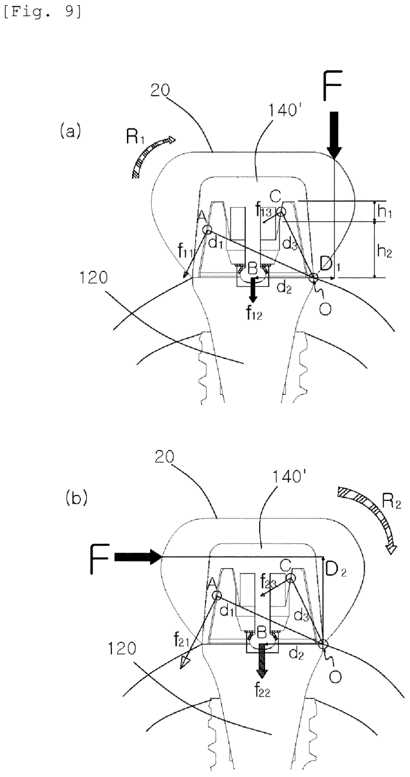

FIG. 7 is a view illustrating a crown medium of a detachable dental implant system according to an embodiment of the present disclosure, FIG. 8 is a view illustrating a coupling process of a detachable dental implant system using the crown medium of FIG. 7, and FIG. 9 is a view illustrating effects of the detachable dental implant system of FIG. 8.

Referring to FIGS. 7 to 9, a crown medium 140' according to the present disclosure may have a ring-shaped protrusion 150 formed around the distance holder 160 formed in the accommodation space 145 and the outer surface of the ring-shaped protrusion 150 may be formed as a second close contact inclination surface 152 corresponding to the inner inclination surface 132 of the abutment 120.

The inner inclination surface 132 having an inverse truncated pillar shape may be formed as an inner wall in the internal space 130 and the ring-shaped protrusion 150 may be formed around the distance holder 160 to be in contact with the inner inclination surface 132. Accordingly, more stable coupling can be achieved by the surface contact between the outer inclination surface 122 and the first close contact inclination surface 142 and the surface contact between the inner inclination surface 132 and the second close contact inclination surface 152.

Further, the outer inclination surface 122 and the inner inclination surface 132 may be formed with different heights. For example, the lower end of the inner inclination surface 132 may be positioned higher than the lower end of the outer inclination surface 122. Accordingly, as in FIG. 9, the locking position C between the inner inclination surface and the second close contact inclination surface and the locking position A between the outer inclination surface and the first close contact inclination surface are different from each other, thereby being able to resist separation therebetween.

The height $h_1$ from the upper end of the abutment 120 to the lower end of the inner inclination surface may be made shorter than the height $h_2$ from the lower end of the inner inclination surface to the lower end of the outer inclination surface.

When the angle of the outer inclination surface and the angle of the inner inclination surface from the central axis of the abutment are $\theta_1$ and $\theta_2$, respectively, it is possible to make the two angles $\theta_1$ and $\theta_2$ the same, but the angle $\theta_1$ of the outer inclination surface and the angle $\theta_2$ of the inner inclination surface from the central axis of the abutment may be made with a difference within about 3° ($3 \leq (\theta_1-\theta_2) \leq 3$).

The angle $\theta_1$ of the outer inclination surface and the angle $\theta_2$ of the inner inclination surface from the central axis of the abutment both may be made within the range of about 4° ~ 15°. In this case, the angles $\theta_1$ and $\theta_2$ of the inclination surfaces may be understood as positive numbers having different directions, and when the angles are smaller than 4°, the prosthesis 20 and the abutment 120 has to be coupled almost only in the axial direction, so difficulty of the system may excessively increases. Further, when the angles are larger than 15°, the coupling force by the surface contact between the prosthesis 20 and the abutment 120 decreases, so the prosthesis 20 may be easily separated from the abutment 120 even by a very small external force.

Referring to FIG. 9, surface contact between the inner inclination surface 132 and the second close contact inclination surface 152 is added, whereby the coupling force between the crown medium 140' and the abutment 120 can be further enhanced.

Referring to FIG. 9(a), an eccentric force F is applied to the top of the prosthesis 20 and torque may be generated at the end O between the adjacent crown medium 140 and abutment 120.

Assuming that event toque by the eccentric force F is $F*D_1$, resistance torque accompanying the event torque $F*D_1$ is the sum of resistance torque $f_{11}*d_1$ by surface contact of the outer inclination surface and the first close contact inclination surface at a point A, resistance torque $f_{12}*d_2$ by the distance holder 160 at a point B, and resistance torque $f_{13}*d_3$ by surface contact of the inner inclination surface and the second close contact inclination surface at a point C, so it is possible to more stably prevent coming-off of the prosthesis 20.

As in FIG. 9(b), even though larger event toque $F*D_2$ is generated, resistance torque accompanying the event torque $F*D_2$ is the sum of resistance torque $f_{21}*d_1$ by surface contact of the outer inclination surface and the first close contact inclination surface at a point A, resistance torque $f_{22}*d_2$ by the distance holder 160 at a point B, and resistance torque $f_{23}*d_3$ by surface contact of the inner inclination surface and the second close contact inclination surface at a point C, so it is possible to more stably prevent coming-off of the prosthesis 20.

Further, since the direction of a resistance force $f_{11}$ at the point A and the direction of a resistance force $f_{13}$ at the point C are different from each other, it may also be possible to cope with various factors that are generated by the difference in direction of resistance forces.

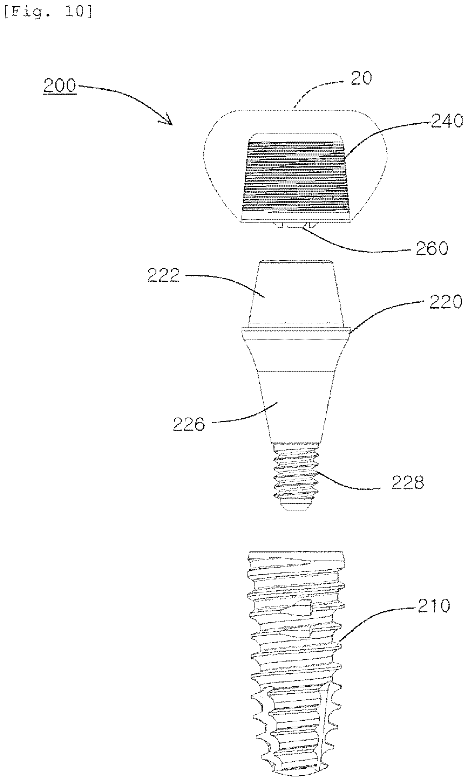

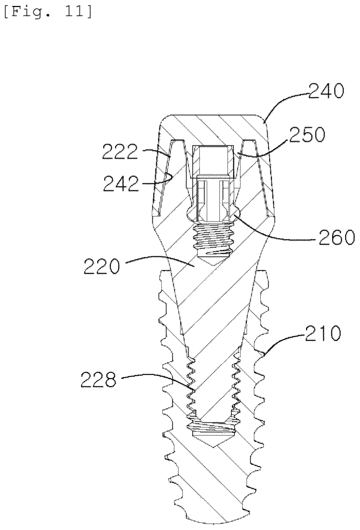

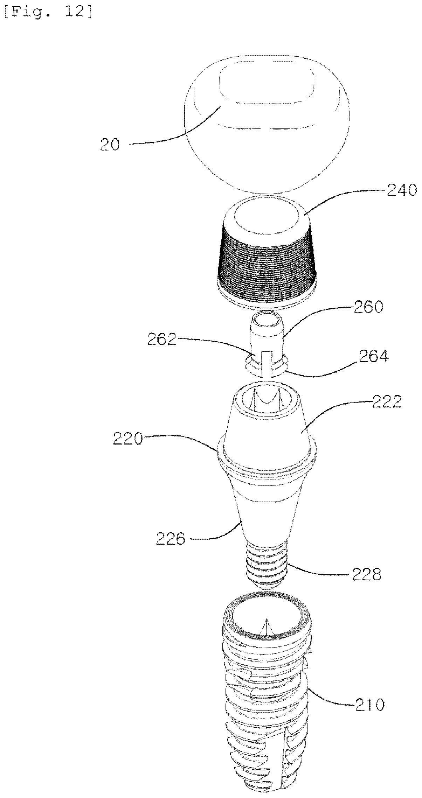

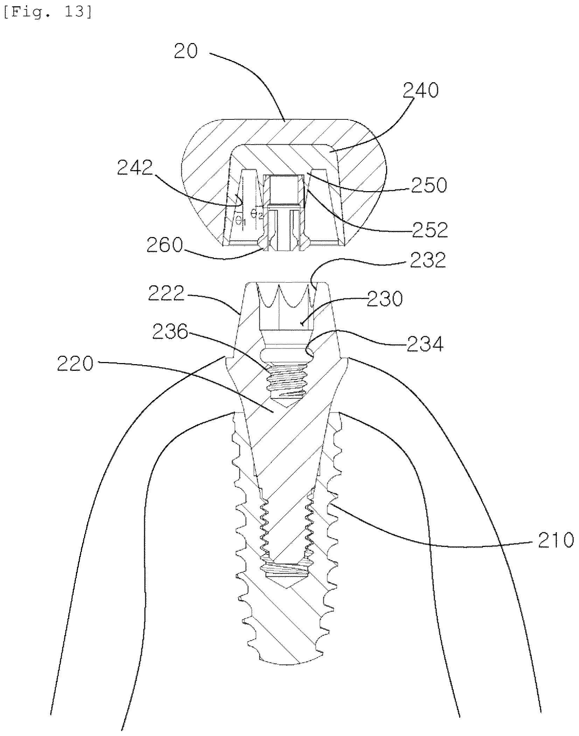

FIG. 10 is a view illustrating a detachable dental implant system according to an embodiment of the present disclosure, FIG. 11 is a view illustrating a cross-section of the detachable dental implant system of FIG. 10, FIG. 12 is a view illustrating a coupling structure of the detachable dental implant system of FIG. 10, and FIG. 13 is a view illustrating a coupling process of the detachable dental implant system of FIG. 10.

Referring to FIGS. 10 to 13, a detachable dental implant system 200 according to an embodiment of the present disclosure may include a fixture 210, an abutment 220, and a crown medium 240.

In this embodiment, the abutment 220 may be coupled to the fixture 210 in an internal type, and the crown medium 240 can be coupled to the upper portion over a tapered body 226, and a male bolt 228 may be formed on the lower portion under the body 226.

In this embodiment, the abutment 220 may be separately provided and may be fixed to the fixture 210 through thread-fastening after the fixture 210 is implanted.

The upper portion of the abutment 220 may provide an outer inclined surface 222 having a truncated cone shape and an internal space 230 with an open top. The internal space 230 may be used as a space for maintaining the distance between the crown medium 240 and the abutment 220 by inserting a distance holder 260 therein.

The crown medium 240 can form the accommodation space, which is open downward, like a cap and the outer surface thereof may be bonded with the prosthesis 20. Referring to FIG. 11, the crown medium 240 may provide an accommodation space that can accommodate the upper portion of the abutment 220, a first close contact inclination surface 242 entirely forming close contact with the outer inclination surface 222 of the abutment 220 may be formed in the accommodation space, and the distance holder 260 fixed to a ring-shaped protrusion 250 by forcible fitting may be fixed downward at the center of the ceiling of the accommodation space.

The distance holder 260 entirely has a cylindrical shape and includes two to six, preferably, four separate elastic legs 262, so it can be provided in an elastically deformable type. A protrusion 264 may be formed outward at the end of each of the elastic legs 262 and a circumferential groove 234 may be formed on the inner wall of the internal space 230 to correspond to the protrusions 264 of the elastic legs 262. In this embodiment, the distance holder 260 may be made of nickel titanium (Ni-Ti) having large elasticity.

Referring to FIG. 13, the crown medium 240 according to this embodiment may have a ring-shaped protrusion 250 at the center of the ceiling and the ring-shaped protrusion 250 may fix the distance holder 260 therein and may have a second close contact inclination surface 252 on the outer surface.

In correspondence to the second close contact inclination surface 252 of the ring-shaped protrusion 250, an inner inclination surface 232 may be formed at the upper portion on the inner wall of the internal space 230 of the abutment 220 to have the same inclination angle and inclination surface as the second close contact inclination surface 252.

A hexagonal groove may be formed on the inner wall of the internal space 230 and it is possible to fasten a hexagonal tool in the internal space 230 and fix the abutment 220 when fixing the abutment 220 to the fixture 210.

Further, a female threaded portion 236 may be formed under the circumferential groove 234 in the internal space 230. The female threaded portion 236 can be used to temporarily fix a corresponding part using thread-fastening rather than the distance holder when using a healing cap, an impression coping, of the like

As described above, the outer inclination surface 222 and the inner inclination surface 232 of the abutment 220 can form surface contact with the first close contact inclination surface 242 and the second close contact inclination surface 252, and the elastic legs 262 of the distance holder 260 can slide inside on the inner wall of the internal space 230 and can be fastened to the circumferential groove 234 while restoring in the circumferential groove 234.

The inner inclination surface 232 of the internal space 230 may be provided in an inverse truncated pillar shape and may be formed to have a predetermined angle with respect to the central axis $\theta_2$ of the abutment 220.

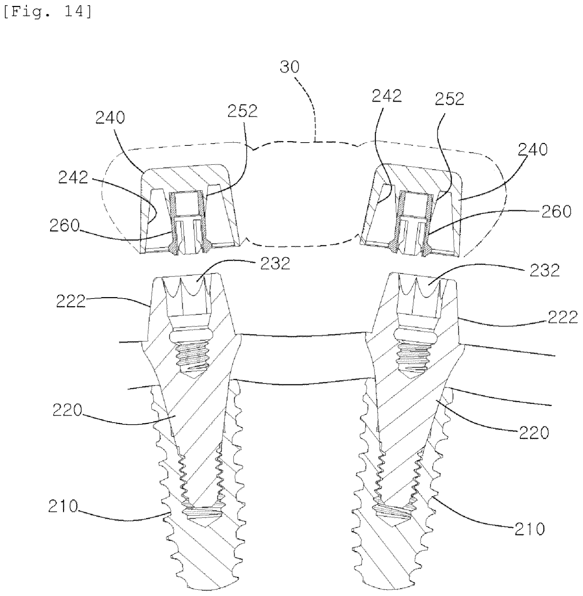

Since the outer inclination surface 222 and the inner inclination surface 232 are formed, it is possible to insert and remove a prosthesis connected by a bridge structure into and out of two or more unparallel abutments. FIGS. 14 to 16 and description thereof may be referred to for this configuration.

Since the elastic legs 262 are formed at the end of the distance holder 260, the assembly of the prosthesis 20 and the crown medium 240 can be inserted slightly at an angle from the axis of the abutment 220 and the elastic legs 262 can enable stable coupling by sliding on the inner wall of the internal space 230 while deforming within an allowable range.

The outer inclination surface 222 and the inner inclination surface 232 of the abutment 220 can keep stably in contact with the first close contact inclination surface 242 and the second close contact inclination surface 252 of the crown medium 240 by the distance holder 260. The inclination surfaces entirely keep in close contact with each other, and, unlike the related art, can keep in contact with each other throughout all of surfaces without factors that interfere with close contact of the two inclination surfaces such as a C-ring, a sealing, and a packing.

Further, a sealing inclination surface having an inclination angle smaller than the angle $\theta_1$ of the outer inclination surface 222 may be further formed at the lower portion of the outer inclination surface 222 and a vertical surface or an inclination surface corresponding to the sealing inclination surface may be formed also at the first close contact inclination surface 242.

The outer inclination surface 222 has an inclination at about 4° ~ 15° from the central axis of the abutment 220, but the sealing inclination surface may have an inclination angle smaller than that of the outer inclination surface 222 or an inclination angle of about 4° or less.

FIGS. 14 to 16 are views illustrating other use examples of a detachable dental implant system according to an embodiment of the present disclosure.

Referring to FIGS. 14 to 16, it is possible to manufacture a prosthesis 30 connecting crown media 240 respectively corresponding to two or more implanted fixtures 210 through a bridge. Two fixtures 210 are implanted in an alveolar bone in the figures and it is preferable that they are vertically implanted to be parallel with each other, but it is possible to assume the case in which the fixtures 210 are open in opposite directions due to certain factors or intension.

FIG. 14 shows a state in which the prosthesis 30 of the bridge and the crown media 240 can be moved toward each other through the outer inclination surfaces 222 and the ends of the elastic legs 262 of the distance holder 260 can be inserted into the abutments 220 from the ends of the inner inclination surfaces 232.

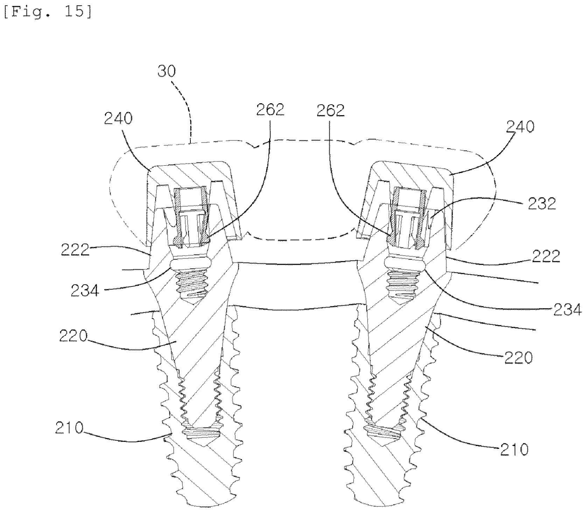

In FIG. 15, as the prosthesis 30 is moved toward the abutments 220, the elastic legs 262 positioned inside can be inserted along the inner inclination surfaces 232 and the inner walls of the internal spaces while partially deforming like a bow.

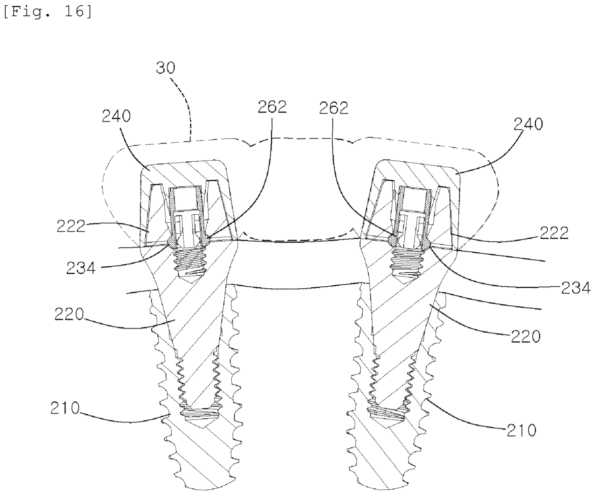

Further, as in FIG. 16, as the crown media 242 are completely brought in close contact with the abutments 220, the protrusions of the elastic legs 262 are seated in the circumferential grooves 234, the first close contact inclination surfaces 242 can be brought in close contact with the outer inclination surfaces 222, and the second close contact inclination surfaces 252 can be brought in close contact with the inner inclination surfaces 232. As described above, other than the configuration that inclinations of the outer inclination surface and the first close contact inclination surface and the inclinations of the inner inclination surface and the second close contact inclination surface 252 form surface contact with each other in relatively wide areas, even though the prosthesis is inserted at an angle slightly departing from the axial direction of the abutment, the prosthesis and the abutment can be coupled.

In this embodiment, it is possible to form the distance holder and the elastic member or elastic groove corresponding thereto in various structures. For example, the elastic structure of the distance holder of FIG. 12 may be applied to the elastic members of FIG. 8.

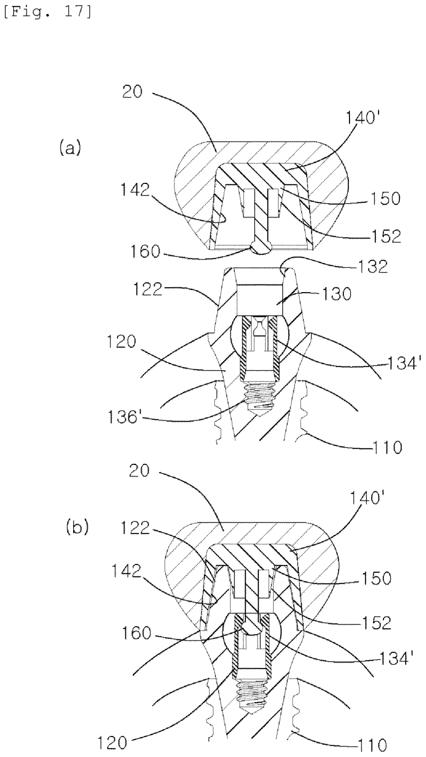

FIG. 17 is a view illustrating a detachable dental implant system according to an embodiment of the present disclosure.

Referring to FIG. 17, an elastic member 134' according to this embodiment may be formed in a cylindrical shape, a plurality of elastic legs may be formed at the upper portion of the elastic member, and protrusions may be formed on the inner sides of the elastic legs.

The elastic member 134' may be fixed in the abutment 120 in a forcible fitting type and a female threaded portion 136' may be further formed under the position at which the elastic member 134' is formed. The female threaded portion 136' may be used to temporarily fix a healing cap, an impression coping, or the like.

When the distance holder 160 is inserted inside the elastic member 134', the distance holder 160 can bring the crown medium 140' and the abutment 120 in close contact with each other with the distance therebetween fixed. The first close contact inclination surface 142 and the second close contact inclination surface 152 of the crown medium 140' can form stable surface contact with the outer inclination surface 122 and the inner inclination surface 132 of the abutment 120 by coupling of the distance holder 160 and the elastic member 134'.

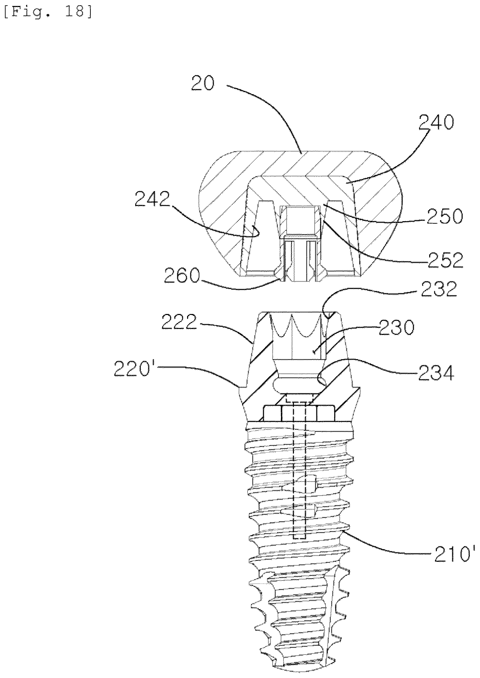

FIG. 18 is a view illustrating a detachable dental implant system according to an embodiment of the present disclosure.

As in FIG. 18, a detachable dental implant system may include a fixture 210', an abutment 220', a crown medium 240, a ring-shaped protrusion 250, and a distance holder 260 and may use surface contact of the outer inclination surface 222 and the first close contact inclination surface 242 and surface contact of the inner inclination surface 232 and the second close contact inclination surface 252.

Unlike the embodiments described above, the fixture 210' and the abutment 220' may be coupled in an external type using a hexagonal protrusion, and even though external type coupling is formed, surface contact of inclination angles and distance limitation coupling of the distance holder can be achieved.

For reference, a protrusion is formed at the distance holder and a circumferential groove is formed in the internal space of the abutment in this embodiment, but, depending on cases, it may also be possible to form a groove at the distance holder and form a protrusion on the inner wall of the internal space.

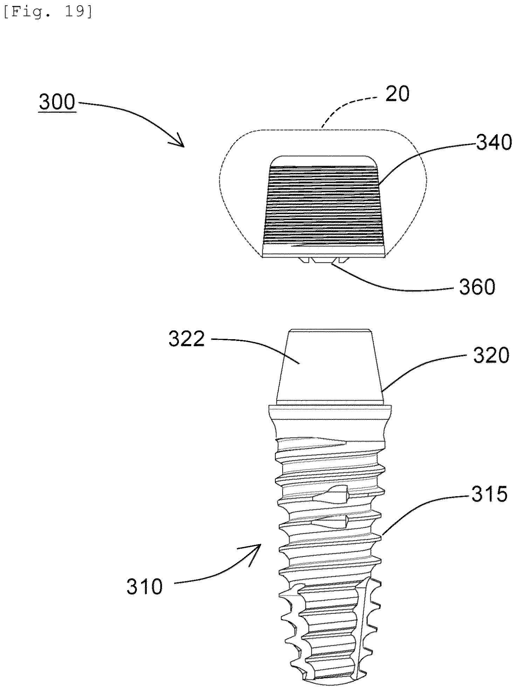

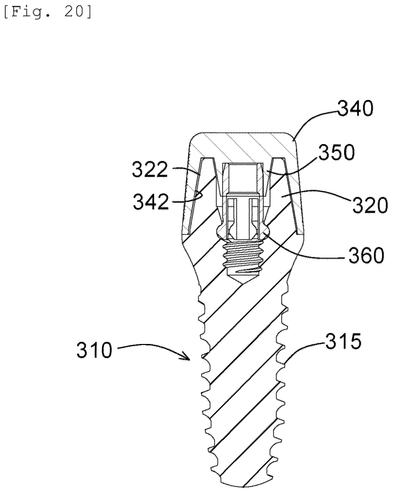

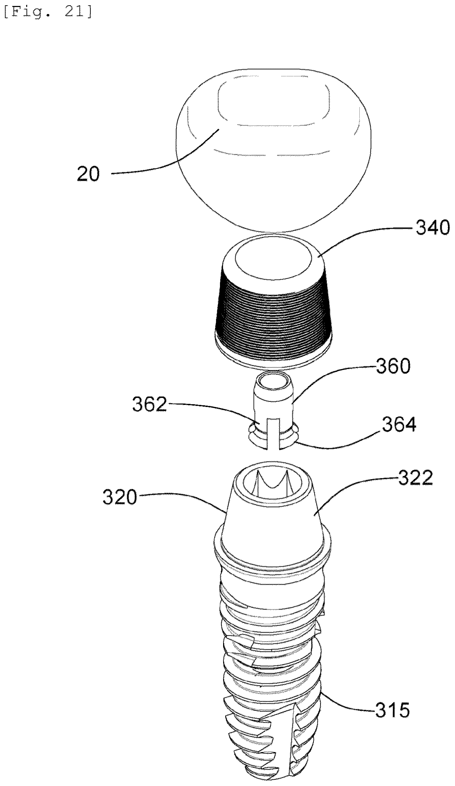

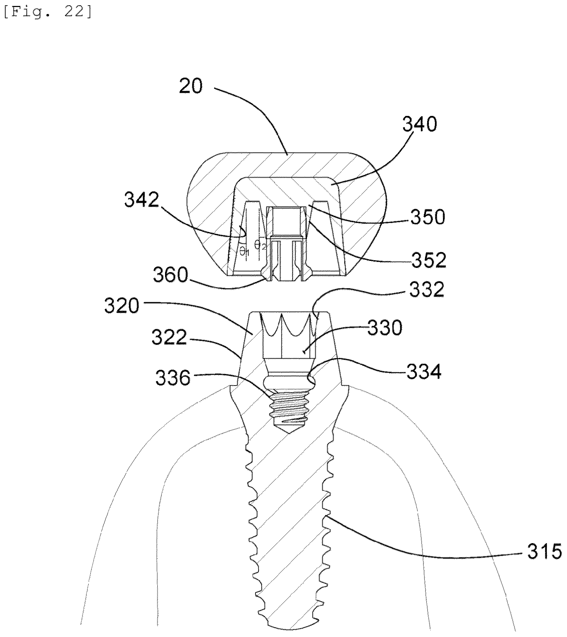

FIG. 19 is a view illustrating a detachable dental implant system according to an embodiment of the present disclosure, FIG. 20 is a view illustrating a cross-section of the detachable dental implant system of FIG. 19, FIG. 21 is a view illustrating a coupling structure of the detachable dental implant system of FIG. 19, and FIG. 22 is a view illustrating a coupling process of the detachable dental implant system of FIG. 19.

Referring to FIGS. 19 to 22, a detachable dental implant system 300 according to an embodiment of the present disclosure may include an implant body 310 provided by integrating an implantation part 315 and an abutment part 320, and a crown medium 340.

In this embodiment, the abutment part 320 may be formed on the implantation part 315 and the crown medium 340 may be coupled to the top of the abutment part 320.

The abutment part 320 may provide an outer inclined surface 322 having a truncated cone shape and an internal space 330 with an open top. An internal space 330 may be used as a space for maintaining the distance between the crown medium 340 and the abutment part 320 by inserting a distance holder 360 therein.

The crown medium 340 can form the accommodation space, which is open downward, like a cap and the outer surface thereof may be bonded with the prosthesis 20. Referring to FIG. 20, the crown medium 340 may provide an accommodation space that can accommodate the upper portion of the abutment part 320 , a first close contact inclination surface 342 entirely forming close contact with the outer inclination surface 322 of the abutment part 320 may be formed in the accommodation space, and the distance holder 360 fixed to a ring-shaped protrusion 350 by forcible fitting may be fixed downward at the center of the ceiling of the accommodation space.

The distance holder 360 entirely has a cylindrical shape and includes two to six, preferably, four separate elastic legs 362, so it can be provided in an elastically deformable type. A protrusion 362 may be formed outward at the end of each of the elastic legs 364 and a circumferential groove 334 may be formed on the inner wall of the internal space 330 to correspond to the protrusions 362 of the elastic legs 364. In this embodiment, the distance holder 360 may be made of nickel titanium (Ni-Ti) having large elasticity.

Referring to FIG. 22, the crown medium 340 according to this embodiment may have a ring-shaped protrusion 350 at the center of the ceiling and the ring-shaped protrusion 350 may fix the distance holder 360 therein and may have a second close contact inclination surface 352 on the outer surface.

In correspondence to the second close contact inclination surface 352 of the ring-shaped protrusion 350, an inner inclination surface 332 may be formed at the upper portion on the inner wall of the internal space 330 of the abutment part 320 to have the same inclination angle and inclination surface as the second close contact inclination surface 352.

A hexagonal groove may be formed in the inner wall of the internal space 330 and it is possible to additionally use a hexagonal tool when fixing the abutment body 310.

Further, a hexagonal or polygonal protrusion may be further formed at the lower portion of the second close contact inclination surface 352 to correspond to the hexagonal groove. The hexagonal or polygonal protrusion is fastened to the hexagonal groove, thereby being able to accurately seat the crown medium 340 and a prosthesis part and restrict rotation thereof.

Further, a female threaded portion 336 may be formed under a circumferential groove 334 in the internal space 330. The female threaded portion 336 can be used to temporarily fix a corresponding part using thread-fastening rather than the distance holder when using a healing cap, an impression coping, of the like

As described above, the outer inclination surface 322 and the inner inclination surface 332 of the abutment part 320 can form surface contact with the first close contact inclination surface 342 and the second close contact inclination surface 352, and the elastic legs 362 of the distance holder 360 can slide inside on the inner wall of the internal space 330 and can be fastened to the circumferential groove 334 while restoring in the circumferential groove 334.

The inner inclination surface 332 of the internal space 330 may be provided in an inverse truncated pillar shape and may be formed to have a predetermined angle with respect to the central axis $\theta_2$ of the abutment part 320.

Since the outer inclination surface 322 and the inner inclination surface 332 are formed, it is possible to insert and remove a prosthesis connected by a bridge structure into and out of two or more unparallel abutment parts. FIGS. 14 to 16 and description thereof may be referred to for this configuration.

Since the elastic legs 362 are formed at the end of the distance holder 360, the assembly of the prosthesis 20 and the crown medium 340 can be inserted slightly at an angle from the axis of the abutment part 320 and the elastic legs 362 can enable stable coupling by sliding on the inner wall of the internal space 330 while deforming within an allowable range.

The outer inclination surface 322 and the inner inclination surface 332 of the abutment part 320 can keep stably in contact with the first close contact inclination surface 342 and the second close contact inclination surface 352 of the crown medium 340 by the distance holder 360. The inclination surfaces entirely keep in close contact with each other, and, unlike the related art, can keep in contact with each other throughout all of surfaces without factors that interfere with close contact of the two inclination surfaces such as a C-ring, a sealing, and a packing.

Further, a sealing inclination surface having an inclination angle smaller than the angle $\theta_1$ of the outer inclination surface 322 may be further formed at the lower portion of the outer inclination surface 322 and a vertical surface or an inclination surface corresponding to the sealing inclination surface may be formed also at the first close contact inclination surface 342.

The outer inclination surface 322 has an inclination at about 4° ~ 15° from the central axis of the abutment part 320, but the sealing inclination surface may have an inclination angle smaller than that of the outer inclination surface 322 or an inclination angle of about 4° or less.

Although exemplary embodiments of the present disclosure were described above with reference to the drawings, it should be understood that the present disclosure may be changed and modified in various ways by those skilled in the art without departing from the spirit and scope of the present disclosure described in claims.

[Description of Reference Numerals]

| | |
|---|---|
| 100: | implant system 110: fixture |
| 120: | abutment 122: outer inclination surface |
| 130: | internal space 132: inner inclination surface |
| 140: | crown medium 142: first close contact surface inclination |
| 150: | ring-shaped protrusion 152: second close contact surface inclination |
| 160: | distance holder |

**Claims**

1.  A detachable dental implant system comprising:

    an implant body including an implantation part that is implanted in an alveolar bone and an abutment part that is fixed to a top of the implantation part and provides an outer inclination surface having a truncated pillar shape and an internal space with an open top; and
    a crown medium that is disposed between the abutment part and a prosthesis and fixes the prosthesis to the abutment part by itself,
    wherein the crown medium includes an accommodation space providing a first close contact inclination surface that is in surface contact with the outer inclination surface and being able to accommodate the abutment part, and a distance holder extending downward from a ceiling of the accommodation space and inserted in the internal space of the abutment part with an end thereof fixed to the abutment part,
surface contact between the outer inclination surface and the first close contact inclination surface and fixing between the abutment part and the distance holder generate resistance torque that interferes with rotation of the crown medium with respect to the abutment part, and
coupling between the abutment part and the distance holder does not interfere with surface contact between the outer inclination surface and the first close contact inclination surface.

2. The detachable dental implant system of claim 1, wherein the crown medium and the abutment part are fastened to each other without cement or an adhesive.

3. The detachable dental implant system of claim 1, wherein the prosthesis can be separably coupled to the abutment part without forming a screw hole in the prosthesis.

4. The detachable dental implant system of claim 1, wherein the implantation part and the abutment part are separately provided as a fixture and an abutment, respectively.

5. The detachable dental implant system of claim 4, wherein the fixture and the abutment are coupled by thread-fastening.

6. The detachable dental implant system of claim 4, wherein the fixture and the abutment are coupled in an internal type or an external type.

7. The detachable dental implant system of claim 1, wherein thee implantation part and the abutment part are integrally formed.

8. The detachable dental implant system of claim 1, wherein the outer inclination surface is formed in a truncated cone shape or a truncated pyramid shape.

9. The detachable dental implant system of claim 1, wherein an inner inclination surface having an inverse truncated pillar shape is formed in the internal space of the abutment part, a ring-shaped protrusion is formed on the ceiling of the accommodation space of the crown medium around the distance holder, and the ring-shaped protrusion provides a second close contact inclination surface that is in surface contact with the inner inclination surface.

10. The detachable dental implant system of claim 9, wherein a lower end of the inner inclination surface is positioned higher than a lower end of the outer inclination surface.

11. The detachable dental implant system of claim 10, wherein a height $h_1$ from an upper end of the abutment to the lower end of the inner inclination surface is shorter than a height $h_2$ from the lower end of the inner inclination surface to the lower end of the outer inclination surface.

12. The detachable dental implant system of claim 9, wherein an angle $\theta_1$ of the outer inclination surface and an angle $\theta_2$ of the inner inclination surface from a central axis of the abutment part are 4° ~ 15°.

13. The detachable dental implant system of claim 12, wherein the angle $\theta_1$ of the outer inclination surface and the angle $\theta_2$ of the inner inclination surface from the central axis of the abutment part satisfy the following formula,

$$-3 \leq (\theta_1 - \theta_2) \leq 3$$

14. The detachable dental implant system of claim 1, wherein the distance holder is provided in a pillar shape having a protrusion or a groove formed at an end, and a groove or a protrusion that is fitted to the protrusion or the groove of the distance holder is formed in the internal space.

15. The detachable dental implant system of claim 1, wherein the distance holder is provided in a cylindrical shape having elastic legs formed at an end, a protrusion is formed at an end of the elastic legs, and a groove that is fitted to the protrusion of the elastic legs is formed on an inner wall of the internal space.

16. The detachable dental implant system of claim 15, wherein a female threaded portion is formed at a lower portion of the inner space under the groove that is fitted to the elastic legs.

17. The detachable dental implant system of claim 1, wherein a sealing inclination surface having an inclination angle smaller than an angle $\theta_1$ of the outer inclination surface is formed at a lower portion of the outer inclination surface.

[Fig. 1]

[Fig. 2]

[Fig. 3]

[Fig. 4]

[Fig. 5]

[Fig. 6]

[Fig. 7]

[Fig. 8]

(a)

(b)

EP 4 438 002 A1

[Fig. 9]

[Fig. 10]

[Fig. 11]

[Fig. 12]

[Fig. 13]

[Fig. 14]

[Fig. 15]

[Fig. 16]

[Fig. 17]

(a)

(b)

[Fig. 18]

[Fig. 19]

[Fig. 20]

[Fig. 21]

[Fig. 22]

## INTERNATIONAL SEARCH REPORT

| International application No. |
|---|
| **PCT/IB2022/060982** |

### A. CLASSIFICATION OF SUBJECT MATTER

**A61C 8/00**(2006.01)i; **A61C 5/70**(2017.01)i

According to International Patent Classification (IPC) or to both national classification and IPC

### B. FIELDS SEARCHED

Minimum documentation searched (classification system followed by classification symbols)

A61C 8/00(2006.01); A61C 13/225(2006.01); A61C 13/265(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 착탈형(detachable), 임플란트(implant), 뿔대(truncated), 어버트먼트(abutment), 거리 고정부(distance fixture), 크라운(crown)

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0129839 A (NEOBIOTECH, CO., LTD.) 18 November 2020 (2020-11-18)<br>See paragraphs [0020]-[0042]; claims 1-10; and figures 1a-4. | 1-17 |
| A | US 2014-0162212 A1 (ZEST IP HOLDINGS LLC) 12 June 2014 (2014-06-12)<br>See entire document. | 1-17 |
| A | KR 10-1924802 B1 (MYEONG MOON DENTAL CO., LTD.) 04 December 2018 (2018-12-04)<br>See entire document. | 1-17 |
| A | KR 10-2009-0110136 A (LEE, Do Sang) 21 October 2009 (2009-10-21)<br>See entire document. | 1-17 |
| A | KR 10-2014-0130773 A (NEOBIOTECH, CO., LTD.) 12 November 2014 (2014-11-12)<br>See entire document. | 1-17 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 February 2023** | **21 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/IB2022/060982**

| Patent document cited in search report | | | Publication date (day/month/year) | Patent family member(s) | | | Publication date (day/month/year) |
|---|---|---|---|---|---|---|---|
| KR | 10-2020-0129839 | A | 18 November 2020 | KR | 10-2323729 | B1 | 09 November 2021 |
| | | | | WO | 2020-230917 | A1 | 19 November 2020 |
| US | 2014-0162212 | A1 | 12 June 2014 | AU | 2013-359890 | A1 | 19 June 2014 |
| | | | | AU | 2013-359890 | B2 | 05 January 2017 |
| | | | | BR | 112015013626 | A2 | 11 July 2017 |
| | | | | CA | 2894519 | A1 | 19 June 2014 |
| | | | | EP | 2931168 | A1 | 21 October 2015 |
| | | | | EP | 2931168 | B1 | 14 June 2017 |
| | | | | EP | 3248567 | A1 | 29 November 2017 |
| | | | | EP | 3248567 | B1 | 31 March 2021 |
| | | | | EP | 3884902 | A1 | 29 September 2021 |
| | | | | ES | 2637262 | T3 | 11 October 2017 |
| | | | | ES | 2871775 | T3 | 02 November 2021 |
| | | | | HK | 1214751 | A1 | 05 August 2016 |
| | | | | HK | 1243617 | A1 | 20 July 2018 |
| | | | | IL | 239329 | A | 30 July 2015 |
| | | | | JP | 2016-503665 | A | 08 February 2016 |
| | | | | JP | 6339093 | B2 | 06 June 2018 |
| | | | | KR | 10-2015-0095696 | A | 21 August 2015 |
| | | | | KR | 10-2171584 | B1 | 30 October 2020 |
| | | | | PL | 2931168 | T3 | 31 October 2017 |
| | | | | US | 2014-0162211 | A1 | 12 June 2014 |
| | | | | US | 9452029 | B2 | 27 September 2016 |
| | | | | US | 9486300 | B2 | 08 November 2016 |
| | | | | WO | 2014-093101 | A1 | 19 June 2014 |
| KR | 10-1924802 | B1 | 04 December 2018 | CN | 111110376 | A | 08 May 2020 |
| | | | | CN | 111110376 | B | 15 October 2021 |
| KR | 10-2009-0110136 | A | 21 October 2009 | None | | | |
| KR | 10-2014-0130773 | A | 12 November 2014 | KR | 10-2212709 | B1 | 05 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100537219
- KR 102323729